# EUROPÄISCHE PATENTSCHRIFT

(11) **EP 1 012 860 B1**
(45) Veröffentlichungstag und Bekanntmachung des Hinweises auf die Patenterteilung: **21.05.2003**
(21) Anmeldenummer: 98949990.0
(22) Anmeldetag: 07.09.1998
(51) Int. Cl.: H01H 9/04

(54) **ELEKTRONISCHES BAUTEIL UND VERFAHREN ZU DESSEN HERSTELLUNG**
ELECTRONIC COMPONENT AND PRODUCTION METHOD THEREOF
COMPOSANT ELECTRONIQUE ET SON PROCEDE DE PRODUCTION

(30) Priorität: 08.09.1997 DE 19740382
(43) Veröffentlichungstag der Anmeldung: 28.06.2000
(73) Patentinhaber: Starcover GmbH, 14513 Teltow (DE)
(72) Erfinder: KOEHN, Matthias-Reinhard, geb. Schulz, D-14052 Berlin (DE)
(74) Vertreter: Pfenning, Meinig & Partner
(86) Internationale Anmeldenummer: EP9805645
(87) Internationale Veröffentlichungsnummer: WO99013480

(56) Entgegenhaltungen:
- EP-A- 0 683 026
- US-A- 5 092 459

## Beschreibung

Die Erfindung betrifft ein Bauteil nach dem Oberbegriff des Anspruchs 1 sowie ein Verfahren zu dessen Herstellung.

Aus der EP 0 683 026 A2 ist ein mobiles Telefon bekannt, das mit einem Gehäuseunterteil und einem Gehäuseoberteil ausgestattet ist. Beide Gehäuseteile sind mit einer elastischen Schicht zur Stoßabsorption überzogen. Wenn die Gehäuseteile zusammengefügt sind, bildet die elastische Schicht eine Umhüllung, die das Gehäuse vollständig umgibt. Die elastische Schicht des oberen Gehäuseteils weist durch Öffnungen in diesem hindurchgehende Vorsprünge auf, über die durch Fingerdruck von außen im Innern des Gehäuses befindliche Schalter betätigt werden können. Hierzu ist erforderlich, daß die Flexibilität der elastischen Schicht relativ gering ist. Dieses bekannte mobile Telefon hat den Nachteil, daß die Umhüllung nicht nahtlos und daher nicht absolut dicht ist und daß die Schalter nicht direkt, sondern nur über die Vorsprünge der elastischen Schicht betätigt werden können, so daß Fehlfunktionen bei der Bedienung des Telefons nicht ausgeschlossen werden können.

Die US-A-5 092 459 offenbart eine Fernbedienung für Fernseh- oder Videogeräte, welche in einem kastenförmigen, aufklappbaren Kunststoffbehälter eingesetzt ist, um sie vor dem Eindringen von Flüssigkeiten zu schützen. Der Kunststoffbehälter besteht ebenfalls aus elastischem Material, wobei er über den aus dem Gehäuse der Fernbedienung hinaustretenden Tasten jeweils gewölbt ist, so daß er einen Abstand zu den Tasten aufweist. Weiterhin ist der Kunststoffbehälter über den Tasten mit zu diesen gerichteten Vorsprüngen versehen, über die durch Fingerdruck eine Betätigung der Tasten möglich ist. Damit der Kunststoffbehälter dem Fingerdruck nachgeben kann, ist seine Dicke über den Tasten herabgesetzt. Im Wesentlichen treten auch hier die Nachteile auf, welche das mobile Telefon nach EP 0 683 026 A2 aufweist.

Es besteht jedoch ein erheblicher Bedarf an wasserdichten elektronischen Bauteilen, insbesondere wenn sie als Computer-Maus verwendet werden. Werden sie beispielsweise im medizinischen Bereich eingesetzt, dann ist eine Desinfektion nur möglich, wenn das Bauteil dicht eingeschlossen ist. Dieses Erfordernis besteht auch, wenn die Umgebung, in der das Bauteil zur Anwendung kommt, eine chemisch aggressive oder feuchte Atmosphäre hat.

Es ist daher die Aufgabe der vorliegenden Erfindung, ein bewegbares elektronisches Bauteil mit einem Gehäuse und mit von außen betätigbaren Sensorik-Bedienelementen zur Steuerung der Funktion des Bauteils, wobei das Gehäuse und die Bedienelemente vollständig von einer Umhüllung umgeben sind, zu schaffen, das ohne Beeinträchtigung der Möglichkeit der Betätigung der Bedienelemente wasserdicht gekapselt ist. Unter Sensorik-Bedienelementen sind hier solche Bedienelemente zu verstehen, die auf Zug-, Biegungs-, Druck- und Schubkräfte reagieren. Weiterhin besteht die Aufgabe darin, ein bevorzugtes Verfahren zum Herstellen eines derartigen Bauteils anzugeben.

Diese Aufgabe wird erfindungsgemäß gelöst durch die im kennzeichnenden Teil des Anspruchs 1 angegebenen Merkmale. Das erfindungsgemäße Verfahren ergibt sich aus den Merkmalen des Anspruchs 1. Vorteilhafte Weiterbildungen des erfindungsgemäßen Bauteils sowie des erfindungsgemäßen Verfahrens ergeben sich aus den jeweils zugeordneten Unteransprüchen.

Dadurch, daß das Gehäuse einschließlich der Bedienelemente nahtlos von der zumindest im Bereich der Bedienelemente folienartig ausgebildeten, stark flexiblen und weichen Umhüllung aus Kunststoff eng anliegend, jedoch nicht mit dem Gehäuse und den Bedienelementen verbunden umgeben ist, weist das Bauteil keinerlei Öffnungen auf, durch die ein Gas oder eine Flüssigkeit in das Innere des Bauteils dringen könnte, und durch die hohe Flexibilität der Umhüllung im Bedienelemente-Bereich setzt diese sowohl einer Hinein- oder Herausbewegung also auch einer Verschiebebewegung bei der direkten Betätigung der Bedienelemente praktisch keinen Widerstand entgegen. Die Funktion des Bauteils wird somit durch die Umhüllung nicht beeinträchtigt.

Die Bedienelemente des Bauteils sind vorzugsweise als Kurzhub-Tasten ausgebildet. Hierdurch ist sichergestellt, daß die umhüllende Kunststoffschicht in jeder Stellung der Tasten fest an diesen anliegt und sich beim Niederdrücken einer Taste keine hohle Tasche bildet.

Zweckmäßig ist die Umhüllung außerhalb des Bedienelemente-Bereichs fest mit dem Bauteil verbunden, so daß dieses innerhalb der Umhüllung nicht verrutschen kann, wodurch die Betätigung der Bedienelemente beeinträchtigt werden könnte.

Zusätzlich zu Tasten als Bedienelementen oder anstelle von diesen kann das Bauteil mit mindestens einem von außen beeinflußbaren Sensor versehen sein, wobei bei Verwendung eines Bewegungssensors die Umhüllung diesem die gleiche Bewegungsfreiheit läßt wie einer Taste.

Vorteilhaft besteht die Umhüllung im Bedienelemente-Bereich aus einem weicheren Kunststoff als in den übrigen Bereichen. Hierdurch gibt die Umhüllung einerseits dem Bauteil eine zusätzliche mechanische Festigkeit, wobei sie beispielsweise als Fuß ausgebildet sein kann, um dem Bauteil einen sicheren Stand zu geben, und andererseits wird die Betätigung der Bedienelemente nicht beeinträchtigt.

Ein bevorzugtes Verfahren zum Herstellung eines derartigen Bauteils besteht darin, daß das Bauteil zunächst mit einer dünnen und flexiblen Folie ganz oder teilweise abgedichtet wird. Dann wird zumindest im Bedienelemente-Bereich eine diesem angepaßte, vorgefertigte dünne Kunststoffschicht fest an das Bauteil angelegt und auf die übrigen Bereiche ein flüssiger, aushärtender Kunststoff aufgebracht, der sich mit der Kunststoffschicht beim Aushärten nahtlos verbindet.

Hierdurch kann erreicht werden, daß die Umhüllung am Bedienelemente-Bereich zwar fest anliegt, mit diesem aber nicht verbunden ist, so daß eine Betätigung der Bedienelemente nicht behindert wird, während die übrigen Bereiche der Umhüllung fest mit dem Gehäuse des Bauteils verbunden sind. Auch ermöglicht dieses Verfahren, eine einstückige Umhüllung aus zwei Kunststoffen mit unterschiedlichen mechanischen Eigenschaften herzustellen, nämlich aus einem sehr weichen Kunststoff im Bereich der Bedienelemente und einem deutlich festeren Kunststoff in den übrigen Bereichen.

Die vorgefertigte dünne Kunststoffschicht ist ein Teil aus weichem elastischem Kunststoff, beispielsweise ein Spritzgußteil, ein vergossenes Teil oder eine tiefgezogene Kunststoffolie.

Die Erfindung wird im folgenden anhand von in den Figuren dargestellten Ausführungsbeispielen näher erläutert. Es zeigen:
- Fig. 1: eine Computer-Maus im Querschnitt mit einem Bewegungssensor und Kurzhub,
- Fig. 2: eine Computer-Maus im Querschnitt mit einem Foliensensor und Kurzhub-Tasten,
- Fig. 3: die Computer-Maus nach Fig. 2 mit zusätzlichen LED-Elementen,
- Fig. 4: die Computer-Maus nach Fig. 2 mit einem zusätzlichen Mikrofon, und
- Fig.5: die Computer-Maus nach Fig. 2 mit einer zusätzlichen Anzeigevorrichtung.

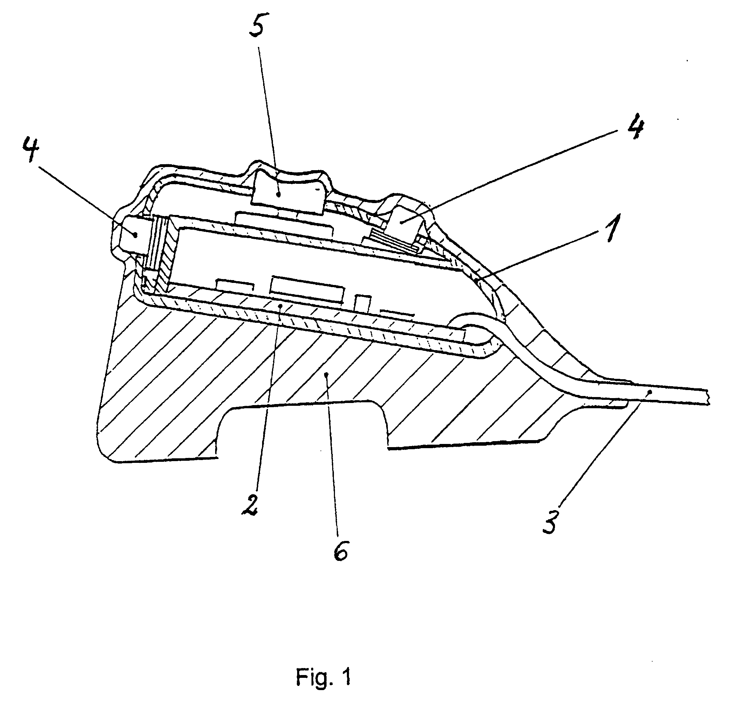

Fig. 1 enthält eine an sich bekannte Computer-Maus mit einem Gehäuse 1, in welchem sich eine mit elektronischen Bausteinen bestückte Leiterplatte 2 befindet, einem nach außen führenden elektrischen Anschlußkabel 3, von außen betätigbaren Tasten 4 zur Steuerung der Funktion der Maus sowie einen Bewegungssensor 5. Die Tasten 4 und der Bewegungssensor 5 sind senkrecht zur Oberfläche des Gehäuses 1 bewegbar. Die Tasten 4 sind vorzugsweise Kurzhub-Elemente, das heißt ihr Bewegungshub ist relativ klein. Der Bewegungssensor 5 kann beliebig bewegbar sein, zum Beispiel auch Kipp- und Drehbewegungen durchführen.

Neu gegenüber einer bekannten Computer-Maus und herkömmlichen Joystick-Lösungen ist eine Kunststoffumhüllung 6, die das abgedichtete Gehäuse 1 nahtlos und damit gas- und wasserdicht umgibt. Lediglich das Anschlußkabel 3 ist durch die Umhüllung 6 hindurchgeführt, wobei jedoch auch diese Durchführung wasserdicht ausgebildet ist.

Die Umhüllung 6 ist als dünne Kunststoffschicht über den Tasten 4 und dem Bewegungssensor 5 ausgebildet, wobei sie eng an diesen anliegt, ohne jedoch mit ihnen verbunden zu sein. Es ist somit eine Relativbewegung zwischen der Umhüllung 6 und den Tasten 4 bzw. dem Bewegungssensor 5 möglich.

Außerhalb des Bedienelemente-Bereichs ist die Umhüllung 6 vorzugsweise fest mit dem Gehäuse 1 verbunden und auch dicker ausgebildet als die dünne Schicht über den Tasten 4 bzw. dem Bewegungssensor 5. So ist im gezeigten Beispiel die Umhüllung 6 auf der Unterseite der Maus fuß- oder sockelartig geformt, so daß sie einen festen Stand der Maus auf einer Unterlage sicherstellt.

Zur Herstellung der Umhüllung 6 wird zunächst eine dünne Kunststoffschicht gefertigt, beispielsweise als gegossenes Teil oder tiefgezogene Folie, die den Bereich der Tasten 4 und des Bewegungssensors 5 überdeckt und der Oberfläche des Gehäuses 1 in diesem Bereich, aus der die Tasten 4 und der Bewegungssensor 5 herausragen, angepaßt ist. Diese Kunststoffschicht wird in eine die Außenkontur der gesamten Umhüllung 6 darstellende Form eingelegt, das ganz oder teilweise abgedichtete Gehäuse 1 paßgenau auf die Kunststoffschicht gelegt und dann die Form mit flüssigem Kunststoff ausgegossen, welche anschließend aushärtet. Dabei findet eine nahtlose Verbindung zwischen dem Rand der Kunststoffschicht und dem aushärtenden flüssigen Kunststoff statt. Hierfür ist nicht erforderlich, daß diese Kunststoffe einander identisch sind. Daher können sie unterschiedliche mechanische Eigenschaften aufweisen; insbesondere sollte die Kunststoffschicht sehr flexibel sein und aus weichem Material bestehen, während der in der Form aushärtende Kunststoff eine größere Härte besitzen sollte, um der Maus eine möglichst große Stabilität und Standsicherheit zu geben. So können die beiden Kunststoffe aus Polyurethanen bestehen, die unterschiedliche Diole enthalten.

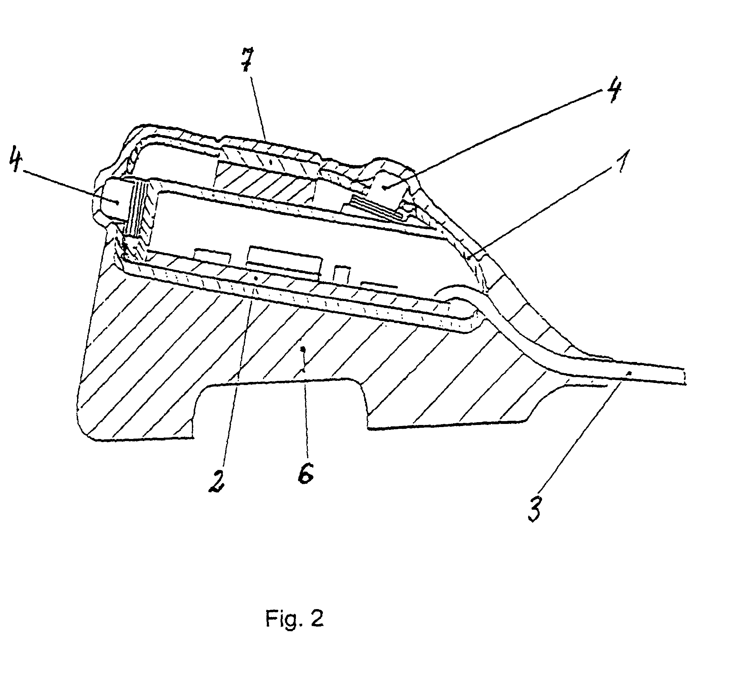

Die Computer-Maus nach Fig. 2 unterscheidet sich von der nach Fig. 1 nur dadurch, daß anstelle des Bewegungssensors 5 ein Foliensensor 7 verwendet wird. Ansonsten sind die gezeigten Bauteile identisch, wobei jedoch die Wahl des Kunststoffs für die Umhüllung 6 und die Konstruktionsprinzipien dem jeweiligen Sensor angepaßt sind.

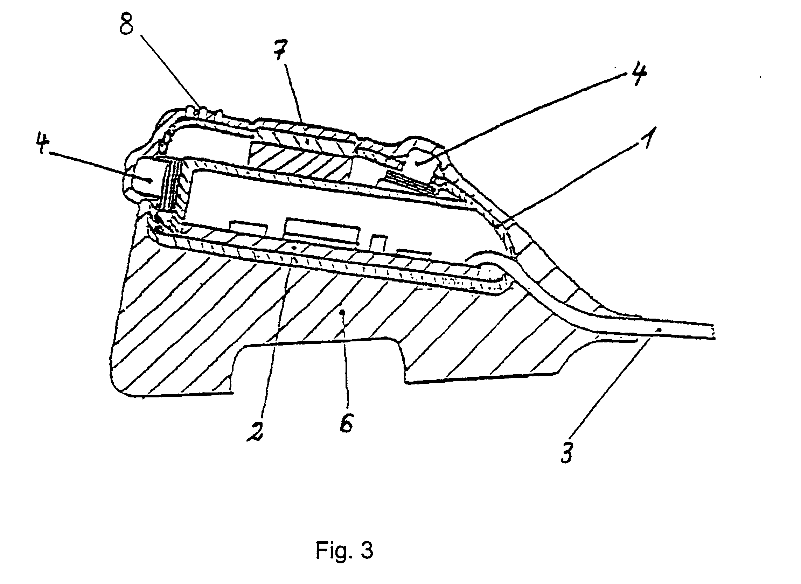

Fig. 3 zeigt die Computer-Maus nach Fig. 2, wobei diese jedoch in die Umhüllung 6 wasserdicht eingebettete LED-Elemente 8 enthält, die aus dem Inneren der Computer-Maus ansteuerbar sind.

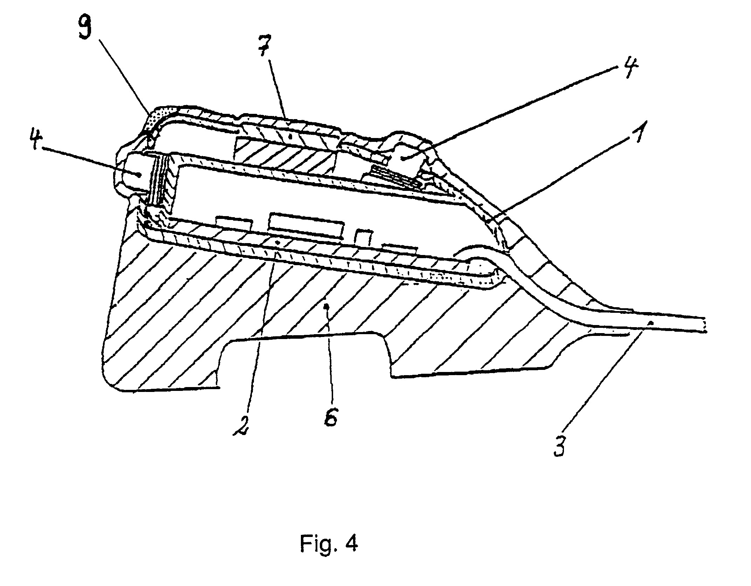

Auch Fig. 4 gibt die Computer-Maus nach Fig. 2 wieder; diese ist jedoch ergänzt durch ein ebenfalls wasserdicht in die Umhüllung 6 eingebettetes Mikrofon 9, das elektrisch mit zugeordneten Bauelementen auf der Leiterplatte 2 verbunden ist.

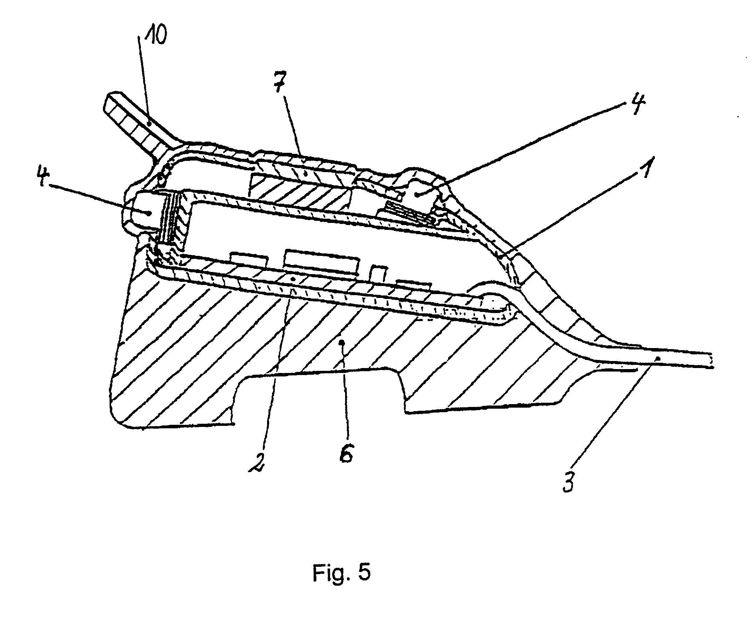

Gemäß Fig. 5 schließlich ist die Computer-Maus auf der Außenseite der Umhüllung 6 mit einer Anzeigevorrichtung 10 versehen, welche über das Anschlußkabel 3 ansteuerbar ist.

Das vorliegende elektronische Bauteil kann auch so ausgebildet sein, daß es eine elektrische Verbindung nach außen über das Anschlußkabel nicht benötigt. Es enthält dann zweckkmäßig in seinem durch die Umhüllung eingeschlossenen Inneren einen Empfänger sowie einen Sender für eine leitungsungebundene Übertragung von elektrischer Energie für die Datenübertragung und gegebenenfalls auch für die Stromversorgung.

## Patentansprüche

1. Bewegbares elektronisches Bauteil mit einem Gehäuse (1) und mit von außen betätigbaren Sensorik-Bedienelementen (4,5) zur Steuerung der Funktion des Bauteils, wobei das Gehäuse (1) und die Bedienelemente (4,5) vollständig von einer Umhüllung (6) umgeben sind,
**dadurch gekennzeichnet, daß** das Gehäuse (1) einschließlich der Bedienelemente (4,5) nahtlos von der zumindest im Bereich der Bedienelemente (4,5) folienartig ausgebildeten, stark flexiblen und weichen Umhüllung (6) aus Kunststoff eng anliegend, jedoch nicht mit dem Gehäuse (1) und den Bedienelementen (4,5) verbunden umgeben ist.

2. Bauteil nach Anspruch 1, **dadurch gekennzeichnet, daß** die Bedienelemente Kurzhub-Tasten (4) sind.

3. Bauteil nach Anspruch 1 oder 2, **dadurch gekennzeichnet, daß** es eine Computer-Maus mit einem mechanisch von außen beeinflußbaren Sensor (5,7) ist.

4. Bauteil nach Anspruch 3, **dadurch gekennzeichnet, daß** der Sensor ein Bewegungssensor (5) ist.

5. Bauteil nach Anspruch 3, **dadurch gekennzeichnet, daß** der Sensor ein Foliensensor (7) ist.

6. Bauteil nach einem der Ansprüche 1 bis 5, **dadurch gekennzeichnet, daß** es eine wasserdicht durch die Umhüllung (6) geführte elektrische Anschlußleitung (3) aufweist.

7. Bauteil nach einem der Ansprüche 1 bis 6, **dadurch gekennzeichnet, daß** es von der Umhüllung (6) fest umschlossen ist.

8. Bauteil nach einem der Ansprüche 1 bis 7, **dadurch gekennzeichnet, daß** die Umhüllung (6) außerhalb des Bedienelemente-Bereichs fest mit dem Bauteil verbunden ist.

9. Bauteil nach einem der Ansprüche 1 bis 8, **dadurch gekennzeichnet, daß** die Umhüllung (6) im Bedienelemente-Bereich aus weicherem Kunststoff besteht als in den übrigen Bereichen.

10. Bauteil nach Anspruch 9, **dadurch gekennzeichnet, daß** die Umhüllung (6) aus Polyurethan mit zumindest im Bedienelemente-Bereich geringerer Härte als in den übrigen Bereichen besteht.

11. Bauteil nach einem der Ansprüche 1 bis 10, **dadurch gekennzeichnet, daß** die Umhüllung (6) in einem Bereich außerhalb des Bedienelemente-Bereichs fußartig ausgebildet ist.

12. Bauteil nach einem der Ansprüche 1 bis 11, **dadurch gekennzeichnet, daß** LED-Elemente (8) in die Umhüllung (6) eingebettet sind.

13. Bauteil nach einem der Ansprüche 1 bis 12, **dadurch gekennzeichnet, daß** ein Mikrofon (9) in die Umhüllung (6) eingebettet ist.

14. Bauteil nach einem der Ansprüche 1 bis 13, **dadurch gekennzeichnet, daß** eine Anzeigevorrichtung (10) auf der Außenseite der Umhüllung (6) angebracht ist.

15. Bauteil nach einem der Ansprüche 1 bis 14, **dadurch gekennzeichnet, daß** es einen Sender und einen Empfänger für eine leitungsungebundene Übertragung elektrischer Energie enthält.

16. Verfahren zum Herstellen eines Bauteils nach einem der Ansprüche 1 bis 15, **dadurch gekennzeichnet, daß** zumindest im Bedienelemente-Bereich eine diesem angepaßte, vorgefertigte dünne Kunststoffschicht fest an das Bauteil angelegt wird und anschließend auf die übrigen Bereiche ein flüssiger, aushärtender Kunststoff, der sich mit der Kunststoffschicht beim Aushärten nahtlos verbindet, aufgebracht wird.

17. Verfahren nach Anspruch 16, **dadurch gekennzeichnet, daß** für die Kunststoffschicht und den flüssigen Kunststoff Polyurethane verwendet werden, wobei die Kunststoffschicht ein Weichkunststoff ist und der flüssige Kunststoff zu einem Hartkunststoff aushärtet.

## Claims

1. Mobile electronic component with a housing (1) and externally actuated sensory operating elements (4, 5) for controlling the operation of the component, and the housing (1) and the operating elements (4, 5) are fully encased by a sleeve (6), **characterised in that** the housing (1) including the operating elements (4, 5) is, at least in the area of the operating elements (4, 5), seamlessly and closely wrapped into foil like and very flexible and soft plastic sleeve (6) whilst not being linked to the housing (1) and the operating elements (4, 5).

2. Component according to Claim 1, **characterised in that** the operating elements are short-travel keys (4).

3. Component according to Claim 1 or 2, **characterised in that** it is a computer mouse with a sensor (5, 7) which is mechanically actuated from the outside.

4. Component according to Claim 3, **characterised in that** the sensor is a movement sensor (5).

5. Component according to Claim 3, **characterised in that** the sensor is a foil sensor (7).

6. Component according to one of Claims 1 to 5, **characterised in that** it comprises an electric connecting cable (3) which is in a watertight manner passed through the sleeve (6).

7. Component according to one of Claims 1 to 6, **characterised in that** it is firmly encased by the sleeve (6).

8. Component according to one of Claims 1 to 7, **characterised in that** the sleeve (6) is outside the operating element area fixed to the component.

9. Component according to one of Claims 1 to 8, **characterised in that** the sleeve (6) is in the area of the operating elements of a softer plastic material than in the other areas.

10. Component according to Claim 9, **characterised in that** the sleeve (6) is composed of polyurethane, at least in the operating element area of less hardness than in the other areas.

11. Component according to one of Claims 1 to 10, **characterised in that** the sleeve (6) is in an area outside the operating element area designed like a foot.

12. Component according to one of Claims 1 to 11, **characterised in that** the LED-elements (8) are embedded in the sleeve (6).

13. Component according to one of Claims 1 to 12, **characterised in that** a microphone (9) is embedded in the sleeve (6).

14. Component according to one of Claims 1 to 13, **characterised in that** a display (10) is attached to the outside of the sleeve (6).

15. Component according to one of Claims 1 to 14, **characterised in that** it incorporates a transmitter and a receiver for cable-dependent transfer of electric energy.

16. Method for manufacturing a component according to one of Claims 1 to 15, **characterised in that** at least in the area of the operating elements is firmly placed on the component a fitted and pre-fabricated thin plastic layer, and subsequently a fluid curing plastic material which seamless bonds with the plastic layer whilst curing is applied to the remaining areas.

17. Method according to Claim 16, **characterised in that** polyurethane is used for the plastic layer and the liquid plastic material, and the plastic layer is a soft plastic material and the liquid plastic is cured into a hard plastic material.

## Revendications

1. Composant électronique mobile comportant un boîtier (1) et des éléments de commande de détection (4,5) pouvant être actionnés de l'extérieur pour commander le fonctionnement du composant, le boîtier (1) et les éléments de commande (4,5) étant entourés complètement par une enveloppe (6), **caractérisé en ce que** le boîtier (1) est entouré, y compris les éléments de commande (4,5), sans soudure, par l'enveloppe très flexible et souple (6) en matière plastique, qui est agencée en forme de feuille au moins dans la zone des éléments de commande (4,5) et qui est étroitement appliquée contre le boîtier et les éléments de commande, sans toutefois être reliée au boîtier (1) ni aux éléments de commande (4,5).

2. Composant selon la revendication 1, **caractérisé en ce que** les éléments de commande sont des touches (4) à faible course.

3. Composant selon la revendication 1 ou 2, **caractérisé par le fait qu'**il s'agit d'une souris d'ordinateur comportant un capteur (5,7) pouvant être influencé mécaniquement de l'extérieur.

4. Composant selon la revendication 3, **caractérisé en ce que** le capteur est un capteur de déplacement (5).

5. Composant selon la revendication 3, **caractérisé en ce que** le capteur est un capteur en forme de feuille (7).

6. Composant selon l'une des revendications 1 à 5, **caractérisé en ce qu'**il comporte une ligne de raccordement électrique (3) qui traverse l'enveloppe (6) d'une manière étanche à l'eau.

7. Composant selon l'une des revendications 1 à 6, **caractérisé en ce qu'**il est entouré de façon fixe par l'enveloppe (6).

8. Composant selon l'une des revendications 1 à 7, **caractérisé en ce que** l'enveloppe (6) est reliée de façon fixe au composant à l'extérieur de la zone des éléments de commande.

9. Composant selon l'une des revendications 1 à 8, **caractérisé en ce que** l'enveloppe (6) est constituée, dans la zone des éléments de commande, par une matière plastique plus souple que dans les autres parties.

10. Composant selon la revendication 9, **caractérisé en ce que** l'enveloppe (6) est formée de polyuréthane possédant une dureté plus faible, au moins dans la zone des éléments de commande, que dans les autres zones.

11. Composant selon l'une des revendications 1 à 10, **caractérisé en ce que** l'enveloppe (6) est réalisée en forme de pied dans une zone à l'extérieur de la zone des éléments de commande.

12. Composant selon l'une des revendications 1 à 11, **caractérisé en ce que** des éléments LED (8) sont insérés dans l'enveloppe (6).

13. Composant selon l'une des revendications 1 à 12, **caractérisé en ce qu'**un microphone est inséré dans l'enveloppe (6).

14. Composant selon l'une des revendications 1 à 13, **caractérisé en ce qu'**un dispositif d'affichage (10) est monté sur le côté extérieur de l'enveloppe (6).

15. Composant selon l'une des revendications 1 à 14, **caractérisé en ce qu'**il contient un émetteur et un récepteur pour une transmission, non liée à une ligne, d'énergie électrique.

16. Procédé pour fabriquer un composant selon l'une des revendications 1 à 15, **caractérisé en ce qu'**on applique de façon fixe sur le composant, au moins dans la zone des composants des éléments de commande, une couche de matière plastique mince préfabriquée, adaptée à cette zone, et qu'ensuite on dépose sur les autres zones une matière plastique liquide durcissable, qui se rattache sans soudure à la couche de matière plastique lors du durcissement.

17. Procédé selon la revendication 16, **caractérisé en ce que** pour la couche de matière plastique et la matière plastique liquide, on utilise du polyuréthane, la couche de matière plastique étant une matière plastique souple et la matière plastique liquide durcissant pour former une matière plastique dure.
